(19) Europäisches Patentamt / European Patent Office / Office européen des brevets

(11) **EP 4 668 394 A2**

(12) **EUROPEAN PATENT APPLICATION**

(43) Date of publication:
24.12.2025 Bulletin 2025/52

(21) Application number: 25215049.5

(22) Date of filing: 31.08.2023

(51) International Patent Classification (IPC):
*H01M 10/052* (2010.01)

(52) Cooperative Patent Classification (CPC):
H01M 10/052; C22C 24/00; H01M 4/0488;
H01M 4/405; H01M 4/46; H01M 4/463;
H01M 4/466; H01M 2004/021; H01M 2004/027;
Y02E 60/10

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR

(30) Priority: 31.08.2022 KR 20220110408
26.06.2023 KR 20230082211
30.08.2023 KR 20230114846

(62) Document number(s) of the earlier application(s) in accordance with Art. 76 EPC:
23194536.1 / 4 350 796

(71) Applicant: LG Energy Solution, Ltd.
Seoul 07335 (KR)

(72) Inventors:
• KIM, Yun-Jung
34122 Daejeon (KR)
• KIM, Myeong-Seong
34122 Daejeon (KR)
• KIM, Ki-Hyun
34122 Daejeon (KR)

(74) Representative: Goddar, Heinz J.
Boehmert & Boehmert
Anwaltspartnerschaft mbB
Pettenkoferstrasse 22
80336 München (DE)

Remarks:
This application was filed on 11.11.2025 as a divisional application to the application mentioned under INID code 62.

(54) **NEGATIVE ELECTRODE FOR A LITHIUM SECONDARY BATTERY, A METHOD FOR PREPARING THE SAME AND A LITHIUM SECONDARY BATTERY COMPRISING THE SAME**

(57) The present disclosure relates to a negative electrode for a lithium secondary battery comprising a lithium-magnesium-aluminum alloy, a method for preparing the same and a lithium secondary battery, such as a lithium sulfur battery, comprising the same.

FIG. 1

**Description**

**[Cross-Reference to Related Applications]**

This application claims priority to Korean Patent Application No. 10-2022-0110408, filed August 31, 2022, Korean Patent Application No. 10-2023-0082211, filed June 26, 2023, and Korean Patent Application No. 10-2023-0114846, filed August 30, 2023, the disclosures of which are incorporated by reference in their entirety.

TECHNICAL FIELD

The present disclosure relates to a negative electrode for a lithium secondary battery, a method for preparing the same and to a lithium secondary battery comprising the same.

BACKGROUND ART

As the application range of lithium secondary batteries extends to not only portable electronic devices, but also electric vehicles (EV) and electric storage systems (ESS), demand for lithium secondary batteries with high capacity, high energy density, and long lifetime is increasing.

Among various lithium secondary batteries, a lithium-sulfur battery is a battery system that uses a sulfur-based material containing a sulfur-sulfur bond as a positive electrode active material, and uses lithium metal, a carbon-based material capable of intercalating/deintercalating lithium ions, or silicon, tin or the like, which forms an alloy with lithium, as a negative electrode active material.

In the lithium-sulfur battery, there is an advantage that sulfur, which is the main material of the positive electrode active material, has a low atomic weight, is very rich in resources and thus easy to supply and receive, and is cheap, non-toxic, and environmentally friendly.

In addition, the lithium-sulfur battery has a theoretical specific capacity of 1,675 mAh/g from the conversion reaction of lithium ions and sulfur ($S_8 + 16\,Li^+ + 16\,e^- \rightarrow 8\,Li_2S$) in the positive electrode, and when lithium metal is used as the negative electrode, the theoretical energy density of 2,600 Wh/kg is shown. Since the theoretical energy density of the lithium-sulfur battery is much higher than the theoretical energy density of other battery systems (Ni-MH battery: 450 Wh/kg, Li-FeS battery: 480 Wh/kg, Li-MnO2 battery: 1,000 Wh/kg, Na-S battery: 800 Wh/kg) and lithium ion battery (250 Wh/kg) currently understudy, the lithium-sulfur battery is attracting attention as a high-capacity, eco-friendly, and inexpensive lithium secondary battery among the secondary batteries developed so far.

In addition, in the case of a lithium-sulfur battery, when lithium metal is used as the negative electrode active material, since the theoretical specific capacity is very high as 3,860 mAh/g, and the standard reduction potential (Standard Hydrogen Electrode; SHE) is also very low as - 3.045 V, it is possible to realize a battery with high capacity and high energy density, so several studies are being conducted as a next-generation battery system.

However, as lithium metal, which is a negative electrode active material, reacts easily with the electrolyte due to its high chemical/electrochemical reactivity, a solid electrolyte interface layer (SEI layer), which is a kind of passivation layer, is formed on the surface of the negative electrode. Since the solid electrolyte interface layer formed in this way can secure a certain level of stability for the negative electrode active material comprising lithium metal by suppressing the direct reaction between the electrolyte and lithium metal, it is attempted to form this SEI layer stably and uniformly on the surface of lithium metal in the prior art.

However, in the case of a lithium-sulfur battery, when the negative electrode active material is lithium metal, even if the SEI layer is formed as described above, since the electrochemical reaction of the battery continuously occurs on the surface of lithium metal, it is difficult to keep the SEI layer uniform. In addition, since the SEI layer formed by the reaction between the electrolyte and lithium metal is weak in mechanical strength, as the charging/discharging of the battery proceeds, the structure collapses, causing a local difference in current density, thereby forming lithium dendrite on the surface of lithium metal. In addition, the lithium dendrite formed in this way causes an internal short circuit and inert lithium (dead lithium) of the battery, thereby causing problems of increasing the physical and chemical instability of the lithium secondary battery, as well as reducing the battery capacity and reducing the cycle lifetime. In addition, the cathode active material is dissolved in the form of lithium polysulfide (LiPS) in the electrolyte and moves to the anode to form lithium sulfide by-products, so that cathode active material loss/anode passivation and unwanted side reactions may occur.

Due to the high instability of lithium metal and the problem of generating lithium dendrite as described above, there have been many attempts to solve these problems.

For example, Korean Patent Publication No. 2016-0034183 discloses that the loss of the electrolyte and the generation of dendrites can be prevented by forming a protective layer as a polymer matrix capable of accumulating the electrolyte while protecting the negative electrode on the negative electrode active layer containing lithium metal or lithium alloy.

Korean Patent Publication No. 2016-0052351 discloses that the stability and lifetime characteristics of the lithium secondary battery can be improved by incorporating an absorbent material for lithium dendrite into the polymer protective film formed on the surface of lithium metal and thus suppressing the growth of lithium dendrite.

These prior arts suppressed the reaction between the electrolyte and lithium metal or the formation of lithium dendrite to some extent, but the effect was not sufficient. Also, there is a problem of degeneration such as hardening or expansion of the protective layer as the charging/discharging of the battery proceeds.

DISCLOSURE

Technical problem

Therefore, there is a need to develop a lithium metal negative electrode for use in a lithium secondary battery overcoming drawbacks of the prior art, especially a lithium-based material for forming a negative electrode of a lithium secondary battery suitable to improve the lifetime and efficiency characteristics of the battery.

Technical solution

The above problems are solved in accordance with the independent claims. Further embodiments result from the sub claims and/or the following detailed description.

Especially, in order to achieve the above objects, the present disclosure provides, in a first embodiment, a negative electrode for a lithium secondary battery comprising a lithium-magnesium-aluminum alloy (Li-Mg-Al alloy). The lithium-magnesium-aluminum alloy may have the form of a foil.

According to a second embodiment of the present disclosure, in the first embodiment, the amount of magnesium (Mg) in the lithium-magnesium-aluminum alloy with respect to the total weight (100 wt%wt%) of the lithium-magnesium-aluminum alloy may be from 0.1 to 50 wt%.

According to a third embodiment of the present disclosure, in the first embodiment or the second embodiment, the amount of aluminum in the lithium-magnesium-aluminum alloy with respect to the total weight of the lithium-magnesium-aluminum alloy may be from 0.01 to 10 wt%.

According to a fourth embodiment of the present disclosure, in any of the first to the third embodiments, a weight ratio of magnesium to aluminum in the lithium-magnesium-aluminum alloy may be from 2:1 to 20:1.

According to a fifth embodiment of the present disclosure, in any of the first to the fourth embodiments, the lithium-magnesium-aluminum alloy may be a lithium-magnesium-aluminum foil, and the lithium-magnesium-aluminum foil may have a thickness from 0.1 $\mu$m to 200 $\mu$m.

According to a sixth embodiment of the present disclosure, in any of the first to the fifth embodiments, the lithium-magnesium-aluminum alloy may have an elastic modulus of at least 400 MPa and/or a tensile strength of at least 1.5 MPa. The elastic modulus and the tensile strength can be measured by the following method. First, samples are prepared by punching the lithium-magnesium-aluminum into a predetermined size, and then measurements are performed using a Universal Testing Machine (UTM) and a 20N or 100N load cell for each specimen.

According to a seventh embodiment of the present disclosure, in any of the first to the sixth embodiments, the lithium-magnesium-aluminum alloy may have an $EM_d$ value of at least 600 (MPa $\cdot$ cm$^3$) / g according to the following equation (1)

$$EM_d = \frac{EM_{alloy}}{d_{alloy}} \qquad (1)$$

wherein $EM_{alloy}$ is the elastic modulus of the lithium-magnesium-aluminum alloy, $d_{alloy}$ is the density of the lithium-magnesium-aluminum alloy, the density of the alloy is the mass of the alloy per unit volume of the alloy, and the volume is the apparent volume of the alloy. The elastic modulus can be measured by the following method. First, samples are prepared by punching the lithium-magnesium-aluminum into a predetermined size, and then measurements are performed using a Universal Testing Machine (UTM) and a 20N or 100N load cell for each specimen.

According to an eighth embodiment of the present disclosure, in any of the first to the seventh embodiments, the lithium-magnesium-aluminum alloy may be monolithic.

According to a ninth embodiment of the present disclosure, in any of the first to the eighth embodiments, the magnesium and the aluminum may be uniformly distributed in the lithium-magnesium-aluminum alloy.

In addition, in a tenth embodiment, the present disclosure provides a negative electrode for a lithium secondary battery, comprising an alloy made of a combination of lithium and at least one further metal, wherein the alloy has an elastic modulus of at least 400 MPa. The elastic modulus can be measured by the following method. First, samples are prepared by punching the lithium-magnesium-aluminum into a predetermined size, and then measurements are performed using a Universal Testing Machine (UTM) and a 20N or 100N load cell for each specimen.

According to an eleventh embodiment of the present disclosure, the present disclosure provides a negative electrode for a lithium secondary battery, comprising an alloy made of a combination of lithium and at least one further metal, wherein the alloy has an $EM_d$ value of at least 600 (MPa · cm$^3$) / g according to the following equation (1)

$$EM_d = \frac{EM_{alloy}}{d_{alloy}} \qquad (1)$$

wherein $EM_{alloy}$ is the elastic modulus of the lithium-magnesium-aluminum alloy, $d_{alloy}$ is the density of the lithium-magnesium-aluminum alloy, the density of the alloy is the mass of the alloy per unit volume of the alloy, and the volume is the apparent volume of the alloy. The elastic modulus can be measured by the following method. First, samples are prepared by punching the lithium-magnesium-aluminum into a predetermined size, and then measurements are performed using a Universal Testing Machine (UTM) and a 20N or 100N load cell for each specimen.

According to a twelfth embodiment of the present disclosure, in the tenth embodiment or in the eleventh embodiment, the further metal may be at least one of magnesium and aluminum.

According to a thirteenth embodiment of the present disclosure, in any of the tenth to the twelfth embodiments, the at least one further metal may include or consist of magnesium and aluminum, and a weight ratio of magnesium to aluminum may be from 2:1 to 20:1.

In addition, according to a fifteenth embodiment, the present disclosure provides a lithium secondary battery, comprising the negative electrode for a lithium secondary battery according to any of the first to the thirteenth embodiments.

In a sixteenth embodiment of the present disclosure, in the fifteenth embodiment, the lithium secondary battery may further comprise a separator and an electrolyte.

In a seventeenth embodiment of the present disclosure, in the fifteenth embodiment or the sixteenth embodiment, the lithium secondary battery may be a lithium-sulfur battery in which the positive electrode active material contains sulfur (S) and/or a sulfur (S) compound.

In addition, in an eighteenth embodiment, the present disclosure provides a method for preparing a negative electrode for a lithium secondary battery, wherein the negative electrode for a lithium secondary battery is the negative electrode for a lithium secondary battery according to any of the first to the ninth embodiments. The method comprises the steps:

melting metallic lithium to obtain a first melt;

adding metallic magnesium and metallic aluminum to the first melt obtained in the melting step to obtain a second melt;

alloying the second melt by maintaining the second melt obtained in the adding step at a temperature of at least 200°C; and

cooling the second melt obtained in the alloying step to obtain a lithium-magnesium-aluminum alloy.

In an embodiment of the present disclosure, the alloy may be obtained in the form of ingot, and the method may further comprise the step of thinning the ingot into a plate structure with a predetermined thickness.

Advantageous effects

The lithium secondary batteries, such as lithium sulfur batteries comprising a negative electrode according to the present disclosure show excellent battery life characteristics compared to such batteries using prior art negative electrodes.

The lithium secondary batteries, such as lithium sulfur batteries comprising a negative electrode according to the present disclosure show excellent battery efficiency characteristics such batteries using prior art negative electrodes.

DESCRIPTION OF FIGURES

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, the shape, size, scale or ratio of elements in the drawings included in this application may be exaggerated to emphasize a clearer explanation.

FIG. 1 shows lithium sulfur pouch cell cycle life on basis of the specific capacity of the Example 1 and comparative examples 1, 2 and 3 of the present disclosure.

FIG. 2 shows lithium sulfur pouch cell coulombic efficiency of Example land Comparative examples 1, 2 and 3 of the present disclosure.

FIG. 3 shows elastic moduli of Preparation example 1 and 4 and Comparative example 1 of the present disclosure.

FIG. 4 shows a photographic image of an example of cutting device for cutting an sample for the modulus of elasticity.

FIG. 5 shows a SEM image of the cross section of the negative electrode obtained in Example 1 of the present disclosure.

FIG. 6 and 7 show EDS elemental analysis results for the cross section of the negative electrode obtained in Embodiment 1 of the present disclosure, where FIG. 6 shows the distribution of magnesium in the negative electrode and FIG. 7 shows the distribution of aluminum in the negative electrode.

## DETAILED DESCRIPTION OF THE INVENTION

The terms and words used in the present specification and claims should not be construed as limited to ordinary or dictionary terms and should be construed in a sense and concept consistent with the technical idea of the present disclosure, based on the principle that the inventor can properly define the concept of a term to describe this invention in the best way possible.

Unless otherwise restricted, a detailed description defining or specifying the elements may be applied to all inventions and is not limited to descriptions of particular inventions. That is, the present disclosure also refers to combinations of the embodiments even if they are disclosed separately.

The terminology used herein is for the purpose of describing particular embodiments only and is not intended to be limiting of the invention. The singular forms "a," "an," and "the" comprise plural referents unless the context clearly dictates otherwise. It is to be understood that the terms such as "comprise" or "have" as used in the present specification, are intended to designate the presence of stated features, numbers, steps, operations, components, parts or combinations thereof, but not to preclude the possibility of the presence or addition of one or more other features, numbers, steps, operations, components, parts, or combinations thereof. The term "comprises" explicitly, even if not necessarily limited accordingly, includes the meaning "essentially comprising" and "consists of".

The term "essentially comprises" as used herein has the meaning of "comprising at least 70 %", preferably of "comprising at least 80 %", most preferred of "comprising at least 90 %". If reference is made to the amount of a constituent in a mixture of material, % is wt %, relative to the total weight of the respective mixture. For example, a material essentially comprising polyethylene comprises the polyethylene in an amount of at least 70 wt% with respect to the total weight of the material.

Additionally, the terms "about" and "substantially" as used herein are used in the sense of at, or nearly at, when given the manufacturing and material tolerances inherent in the stated circumstances, and are used to prevent the unscrupulous infringer from unfairly taking advantage of the present disclosure where exact or absolute figures are stated as an aid to understanding the present disclosure.

As used herein, "A and/or B" means "A and B, or A or B".

The term "composite" as used herein refers to a material that two or more materials are combined to express a more effective function while forming physically and chemically different phases to each other.

The term "porosity" used in the present specification refers to a fraction of voids in a structure over the total volume and is indicated in %, and may be used interchangeably with void fraction, degree of porosity or the like. In the present disclosure, the porosity measurement is not limited to a particular method, and according to an embodiment of the present disclosure, for example, the porosity may be measured by BET (Brunauer-Emmett-Teller) measurement method using nitrogen gas or mercury permeation method (Hg porosimeter) and ASTM D-2873.

In addition, the net density of the electrode may be calculated from the density (apparent density) of the electrode, the composition ratio of the materials included in the electrode, and the density of each component. The porosity of the electrode is calculated from the difference between the apparent density and the net density. For example, porosity can be calculated by Equation 1 below.

[Equation 1]

$$\text{Porosity (volume \%)} = \{1-(\text{apparent density/net density})\}\times 100$$

The apparent density in Equation 1 can be calculated from Equation 2 below.

Apparent density (g/cm3) = (weight of electrode (g)) /{(thickness of electrode (cm)) x (area of electrode (cm2))}     [Equation 2]

Apparent density, also known as bulk density, is a measure of how much space a material occupies per unit volume, including the voids or empty spaces within it. Apparent density takes into account both the solid material and any voids present within a given volume.

Apparent density may be calculated by dividing the mass of a substance by its total volume, including any pores or voids. The formula for calculating apparent density is:

$$\text{Apparent Density} = \text{Mass} / \text{Total Volume}$$

The sample of the material may be measured using a balance.

The volume for regularly shaped samples (e.g. cube, cylinder, etc.) may be measured in its dimensions using appropriate tools such as a ruler or calipers, known by the skilled person in the art. For irregularly shaped samples the volume may be measured by the displacement of a liquid with known volume and measuring the change in volume. The change in volume may be equal to the volume of the sample. The skilled person may use other methods known in the art for measuring the volume of the sample, as well as of the apparent density.

The net density, also referred to as true density, may be a measure of the density of a material without considering any voids or pores within it. It may represent the mass of the solid material divided by its actual volume, excluding any empty spaces.

The net density may be calculated by dividing the mass of a substance by its solid, unoccupied volume. The formula for calculating net density is:

$$\text{Net Density} = \text{Mass} / \text{Solid Volume}$$

Unlike apparent density, which takes into account the total volume including voids, net density provides a measure of the material's intrinsic density.

The net density may be determined by the method as mentioned above, or alternatively by gas pycnometry according to ISO 12154:2014, or other measurement methods known by the skilled person in the art.

The term "polysulfide" as used herein is a concept comprising both "polysulfide ion ($S_x^{2-}$ , x = 1 - 8)" and "lithium polysulfide ($Li_2S_x$ or $LiS_x^-$ X = 1 - 8)".

The negative electrode as referred to herein may also be referred to as anode.

Hereinafter, the present disclosure will be described in more detail.

The present disclosure a negative electrode for a lithium secondary battery comprising a lithium-magnesium-aluminum alloy. In a specific embodiment of the present disclosure, the alloy may be introduced into the negative electrode in the form of a foil, that is, may be an lithium-magnesium-aluminum alloy foil, and the negative electrode may be formed with only the lithium-magnesium-aluminum foil, or the lithium-magnesium-aluminum alloy foil and a current collector are bonded to each other, preferably directly bonded to each other, to form the negative electrode.

The amount of magnesium in the lithium-magnesium-aluminum alloy with respect to the total weight of the lithium-magnesium-aluminum alloy may be at least 0.1 wt%. The amount of magnesium in the lithium-magnesium-aluminum alloy with respect to the total weight of the lithium-magnesium-aluminum alloy may be at least 0.5 wt%. The amount of magnesium in the lithium-magnesium-aluminum alloy with respect to the total weight of the lithium-magnesium-aluminum alloy may be at least 1 wt%. The amount of magnesium in the lithium-magnesium-aluminum alloy with respect to the total weight of the lithium-magnesium-aluminum alloy may be at least 2 wt%. The amount of magnesium in the lithium-magnesium-aluminum alloy with respect to the total weight of the lithium-magnesium-aluminum alloy may be at least 3 wt%. The amount of magnesium in the lithium-magnesium-aluminum alloy with respect to the total weight of the lithium-magnesium-aluminum alloy may be at least 4 wt%. These amounts of Mg in the alloy are favorable in view of life and efficiency of the negative electrode.

The amount of magnesium in the lithium-magnesium-aluminum alloy with respect to the total weight of the lithium-magnesium-aluminum alloy may be not more than 50 wt%. The amount of magnesium in the lithium-magnesium-aluminum alloy with respect to the total weight of the lithium-magnesium-aluminum alloy may be not more than 40 wt%. The amount of magnesium in the lithium-magnesium-aluminum alloy with respect to the total weight of the lithium-magnesium-aluminum alloy may be not more than 30 wt%. The amount of magnesium in the lithium-magnesium-aluminum alloy with respect to the total weight of the lithium-magnesium-aluminum alloy may be not more than 25 wt%. The amount of magnesium in the lithium-magnesium-aluminum alloy with respect to the total weight of the lithium-magnesium-aluminum alloy may be not more than 20 wt%. The amount of magnesium in the lithium-magnesium-aluminum alloy with respect to the total weight of the lithium-magnesium-aluminum alloy may be not more than 15 wt%. The amount of magnesium in the lithium-magnesium-aluminum alloy with respect to the total weight of the lithium-magnesium-aluminum alloy may be not more than 12.5 wt%. The amount of magnesium in the lithium-magnesium-aluminum alloy with respect to the total weight of the lithium-magnesium-aluminum alloy may be not more than 10 wt%. The amount of magnesium in the lithium-magnesium-aluminum alloy with respect to the total weight of the lithium-magnesium-aluminum alloy may be not more than 7.5 wt%. The amount of magnesium in the lithium-magnesium-aluminum alloy with respect to the total weight of the lithium-magnesium-aluminum alloy may be not more than 6 wt%. These amounts of Mg in the alloy are favorable in view of life and efficiency of the negative electrode.

The amount of magnesium in the lithium-magnesium-aluminum alloy with respect to the total weight of the lithium-magnesium-aluminum alloy may be from 0.1 to 50 wt%. The amount of magnesium in the lithium-magnesium-aluminum alloy with respect to the total weight of the lithium-magnesium-aluminum alloy may be from 0.5 to 30 wt%. The amount of magnesium in the lithium-magnesium-aluminum alloy with respect to the total weight of the lithium-magnesium-aluminum alloy may be from 1 to 20 wt%. The amount of magnesium in the lithium-magnesium-aluminum alloy with respect to the total weight of the lithium-magnesium-aluminum alloy may be from 2 to 10wt%. The amount of magnesium in the lithium-magnesium-aluminum alloy with respect to the total weight of the lithium-magnesium-aluminum alloy may be from 3 to 7 wt%. The amount of magnesium in the lithium-magnesium-aluminum alloy with respect to the total weight of the lithium-magnesium-aluminum alloy may be from 4 to 6 wt%, such as about 5 wt%. These amounts of Mg in the alloy are favorable in view of life and efficiency of the negative electrode.

The amount of aluminum in the lithium-magnesium-aluminum alloy with respect to the total weight of the lithium-magnesium-aluminum alloy may be at least 0.01 wt%. The amount of aluminum in the lithium-magnesium-aluminum alloy with respect to the total weight of the lithium-magnesium-aluminum alloy may be at least 0.05 wt%. The amount of aluminum in the lithium-magnesium-aluminum alloy with respect to the total weight of the lithium-magnesium-aluminum alloy may be at least 0.1 wt%. The amount of aluminum in the lithium-magnesium-aluminum alloy with respect to the total weight of the lithium-magnesium-aluminum alloy may be at least 0.2 wt%. The amount of aluminum in the lithium-magnesium-aluminum alloy with respect to the total weight of the lithium-magnesium-aluminum alloy may be at least 0.3 wt%. The amount of aluminum in the lithium-magnesium-aluminum alloy with respect to the total weight of the lithium-magnesium-aluminum alloy may be at least 0.4 wt%. These amounts of Al in the alloy are favorable in view of life and efficiency of the negative electrode.

The amount of aluminum in the lithium-magnesium-aluminum alloy with respect to the total weight of the lithium-magnesium-aluminum alloy may be not more than 5 wt%. The amount of aluminum in the lithium-magnesium-aluminum alloy with respect to the total weight of the lithium-magnesium-aluminum alloy may be not more than 4 wt%. The amount of aluminum in the lithium-magnesium-aluminum alloy with respect to the total weight of the lithium-magnesium-aluminum alloy may be not more than 3 wt%. The amount of aluminum in the lithium-magnesium-aluminum alloy with respect to the total weight of the lithium-magnesium-aluminum alloy may be not more than 2.5 wt%. The amount of aluminum in the lithium-magnesium-aluminum alloy with respect to the total weight of the lithium-magnesium-aluminum alloy may be not more than 2 wt%. The amount of aluminum in the lithium-magnesium-aluminum alloy with respect to the total weight of the lithium-magnesium-aluminum alloy may be not more than 1.5 wt%. The amount of aluminum in the lithium-magnesium-aluminum alloy with respect to the total weight of the lithium-magnesium-aluminum alloy may be not more than 1.25 wt%. The amount of aluminum in the lithium-magnesium-aluminum alloy with respect to the total weight of the lithium-magnesium-aluminum alloy may be not more than 1 wt%. The amount of aluminum in the lithium-magnesium-aluminum alloy with respect to the total weight of the lithium-magnesium-aluminum alloy may be not more than 0.75 wt%. The amount of aluminum in the lithium-magnesium-aluminum alloy with respect to the total weight of the lithium-magnesium-aluminum alloy may be not more than 0.6 wt%. These amounts of Al in the alloy are favorable in view of life and efficiency of the negative electrode.

The amount of aluminum in the lithium-magnesium-aluminum alloy with respect to the total weight of the lithium-magnesium-aluminum alloy may be from 0.01 to 5 wt%. The amount of aluminum in the lithium-magnesium-aluminum alloy with respect to the total weight of the lithium-magnesium-aluminum alloy may be from 0.05 to 3 wt%. The amount of aluminum in the lithium-magnesium-aluminum alloy with respect to the total weight of the lithium-magnesium-aluminum alloy may be from 0.1 to 2 wt%. The amount of aluminum in the lithium-magnesium-aluminum alloy with respect to the total weight of the lithium-magnesium-aluminum alloy may be from 0.2 to 1 wt%. The amount of aluminum in the lithium-magnesium-aluminum alloy with respect to the total weight of the lithium-magnesium-aluminum alloy may be from 0.3 to 0.7 wt%. The amount of aluminum in the lithium-magnesium-aluminum alloy with respect to the total weight of the lithium-magnesium-aluminum alloy may be from 0.4 to 0.6 wt%, such as about 0.5 wt%. These amounts of Al in the alloy are favorable in view of life and efficiency of the negative electrode.

The weight ratio of magnesium to aluminum in the lithium-magnesium-aluminum alloy may be from 2:1 to 20:1. The weight ratio of magnesium to aluminum in the lithium-magnesium-aluminum alloy may be from 3:1 to 17.5:1. The weight ratio of magnesium to aluminum in the lithium-magnesium-aluminum alloy may be from 4:1 to 16:1. The weight ratio of magnesium to aluminum in the lithium-magnesium-aluminum alloy may be from 5:1 to 15:1. The weight ratio of magnesium to aluminum in the lithium-magnesium-aluminum alloy may be from 6:1 to 14:1. The weight ratio of magnesium to aluminum in the lithium-magnesium-aluminum alloy may be from 7:1 to 13:1. The weight ratio of magnesium to aluminum in the lithium-magnesium-aluminum alloy may be from 8:1 to 12:1. The weight ratio of magnesium to aluminum in the lithium-magnesium-aluminum alloy is from 9:1 to 11:1, such as about 10:1. These ratios of Mg to Al in the alloy are favorable in view of the elastic modulus of the alloy.

In the case of thinning the lithium-magnesium-aluminum alloy and applying the alloy foil as a negative electrode active material layer, the alloy foil may have a thickness of 10 $\mu$m to 200 $\mu$m. In a specific embodiment, the thickness may be less than 180 $\mu$, less than 160 $\mu$m, less than 150 $\mu$m less than 140 $\mu$m, less than 120 $\mu$m, less than 100 $\mu$m, or less than 90 $\mu$m. The above thickness is favorable for providing a lithium source sufficient for driving a battery and to realize a high energy density.

Meanwhile, the alloy foil may have a thickness of at least 0.1 $\mu$m, at least 0.5 $\mu$m, at least 1 $\mu$m, at least 2 $\mu$, at least 5 $\mu$m, at least 10 $\mu$m, at least 20 $\mu$m, at least 30 $\mu$m, at least 40 $\mu$m, at least 45 $\mu$m, at least 50 $\mu$m, at least 60 $\mu$m, at least 70 $\mu$m, at least 75 $\mu$m,. These lower limits are favorable for providing a lithium source sufficient for driving a battery and to realize a high energy density.

In a specific embodiment, the alloy foil may have a thickness from 0.1 $\mu$m to 200 $\mu$m, from 1 $\mu$m to 200 $\mu$m, from 50 $\mu$m to 150 $\mu$m, from 50 $\mu$m to 120 $\mu$m, from 60 $\mu$m to 110 $\mu$m, from 70 $\mu$m to 90 $\mu$m, or from 75 $\mu$m to 85 $\mu$m, such as about 80 $\mu$m. When the thickness of the lithium metal satisfies the above-defined range, it may be easier to provide a lithium source sufficient for driving a battery and to realize a high energy density.

It may be provided that the lithium-magnesium-aluminum alloy is monolithic. It may be provided that there is no concentration gradient depending on position of the alloy in the entire lithium-magnesium-aluminum alloy with respect to the uniform concentration of magnesium or aluminum. It may be provided that there is no concentration gradient in the lithium-magnesium-aluminum foil with respect to the concentration of magnesium and aluminum. It may be provided that the lithium-magnesium-aluminum alloy is substantially homogeneous. It may be provided that the lithium-magnesium-aluminum alloy is homogeneous. It may be provided that the magnesium and the aluminum are uniformly distributed in the lithium-magnesium-aluminum alloy. It may be provided that the lithium-magnesium-aluminum alloy is a bulk material, such as a substantially homogeneous bulk material, wherein the entire bulk material is uniform in a continuous phase. That is, both Mg and Al are also melted so that the entire bulk is completely uniform in a continuous phase with lithium. That is, the lithium-magnesium-aluminum alloy according to the present disclosure may not comprise the lithium-based material in a non-continuous phase, such as in the form of particles, such as in the form of particles having an alloy shell surrounding a metal (Li) core.

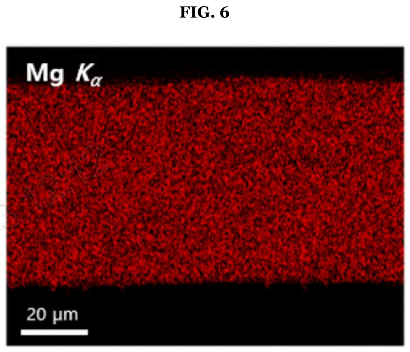

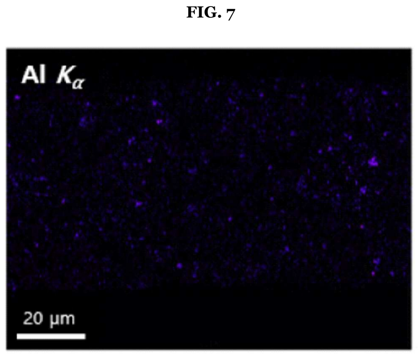

FIGS. 6 and 7 show EDS surface element analysis results for the cross section of the lithium-magnesium-aluminum alloy of Example 1 of the present disclosure, and it can be seen that Mg and Al are uniformly detected throughout the alloy, that is, that the magnesium and the aluminum are uniformly distributed in the lithium-magnesium-aluminum alloy. Meanwhile, the detailed structure of the Li alloy of the present disclosure may vary depending on the content of Mg and Al, and in detail, the structure of the Li alloy may show a uniform $\beta$-lithium phase of a body-centered cubic (BCC) structure, or some of the sites where Li should originally be in the lithium lattice of a BCC structure are substituted with Mg or Al while substantially maintaining the BCC structure, or the newly formed $Li_9Al_4$ phase is uniformly distributed in the alloy matrix in which some of the Li lattice of the BCC structure is substituted with Mg.

The negative electrode may substantially comprise or consist of the lithium-magnesium-aluminum alloy. The alloy may be present in the negative electrode in the form of a foil having a plate-like structure with a predetermined thickness.

In alternative embodiments, the negative electrode can comprise further components, especially may further comprise a current collector (also referred as "negative electrode current collector" herein). In an embodiment of the present disclosure, it may be provided that the negative electrode further comprises a current collector and a negative electrode active material layer disposed on at least one surface of the current collector, and the negative electrode active material layer may further include, substantially comprise or consist of the lithium-magnesium-aluminum alloy. The negative electrode may be formed by bonding, preferably directly bonding, that is, bonding without any further constituents therebetween, the current collector and the alloy foil (pressing process, etc.) or by depositing the lithium-magnesium-aluminum alloy on at least one surface of the current collector.

The negative electrode current collector is for supporting the negative electrode active material layer and is not particularly limited as long as it has high conductivity without causing chemical changes in the battery. For example, copper, stainless steel, aluminum, nickel, titanium, palladium, sintered carbon; copper or stainless steel whose surface is treated with carbon, nickel, silver or the like; aluminum-cadmium alloy or the like can be used. The current collector can strengthen the bonding force with the thin film of lithium metal, which is a negative electrode active material, by forming fine irregularities on its surface, and various forms such as films, sheets, foils, meshes, nets, porous bodies, foams, and nonwoven fabrics may be used. For example, the current collector may be selected from the group consisting of a copper current collector, a porous current collector, and a plastic current collector. The current collector may have a thickness in the range from 1 to 20 $\mu$m. When the thickness of the current collector satisfies the above-defined range, a current collecting effect can be ensured, and processability can be easily ensured even when the cell is assembled by folding.

The lithium-magnesium-aluminum alloy may have an elastic modulus of at least 300 MPa, at least 350 MPa, at least 400 MPa, at least 450 MPa, at least 500 MPa, at least 550 MPa, at least 600 MPa, or at least 650 MPa.

The lithium-magnesium-aluminum alloy may have an elastic modulus of not more than 1,000 MPa, not more than 900 MPa, or not more than 800 MPa.

In a specific embodiment, the lithium-magnesium-aluminum alloy may have an elastic modulus from 300 to 1,000 MPa, from 400 to 1,000 MPa, from 500 to 900 MPa, from 550 to 800 MPa, or from 500 to 700 MPa.

In one embodiment of the present disclosure, the elastic modulus may be measured according to ASTM D 412-B. The ASTM D 412-B is used for measuring the elasticity of materials under tensile deformation and/or for determining the condition of material properties after the load has been removed. The elastic modulus can be expressed as a relational expression between stress ($\sigma$) and strain ($\varepsilon$), and in detail, the measurement method can be described as Equation 2 below.

$$\text{stress } (\sigma) = \text{elastic modulus (E) x strain } (\varepsilon) \qquad (2)$$

Here, $N/mm^2$ may be used as a unit for the stress and elastic modulus. The strain can be calculated by Equation 3 below.

$$\text{strain } (\varepsilon) = \text{deformation } (\delta)/\text{length } (\ell) \qquad (3)$$

In one embodiment of the present disclosure, the elastic modulus may be specifically measured by the following method. First, alloy samples are prepared by punching alloys in a predetermined size, and then measurements are performed using a Universal Testing Machine (UTM) and a 20N or 100N load cell for each specimen.

A known UTM device may be used, and for example, Ametek Ls1 UTM device may be used. In one embodiment of the present invention, the size of the sample is preferably in accordance with ASTM D 412-B. For example, the size of the sample is 80 mm to 200 mm in horizontal length, 10 mm to 50 mm in vertical length, 30 mm to 100 mm in horizontal length of the sample central linear portion, and 1 mm to 12 mm in vertical length of the sample central linear portion. It can be appropriately determined within the range. In a more specific embodiment, the horizontal length of the sample is about 140 mm, the vertical length is about 25 mm, the horizontal length of the sample central linear portion is about 60 mm, and the vertical length of the sample central linear portion may be 6 mm according to ASTM D 412-B.

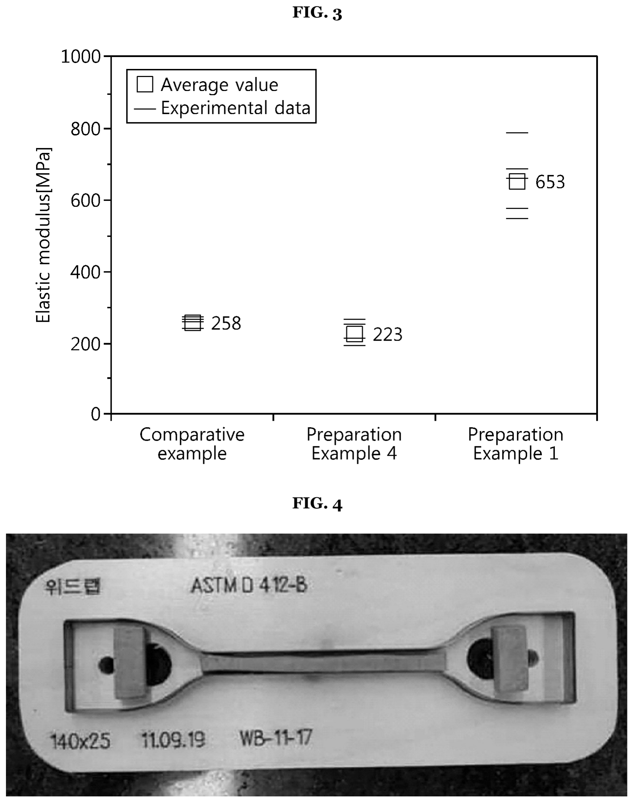

The measurements are performed at a single strain rate of 0.01/s (18 mm/min). FIG. 4 shows a photographic image of an example of a punching frame for punching a specimen used in measuring the modulus of elasticity. The specimen is pressed and punched by using the punching frame.

.

The lithium-magnesium-aluminum alloy may have an $EM_d$ value of at least 450 (MPa · cm$^3$) / g according to the following equation (1).

$$EM_d = \frac{EM_{alloy}}{d_{alloy}} \qquad (1)$$

Here, $EM_{alloy}$ is the elastic modulus of the lithium-magnesium-aluminum alloy measured as set forth herein; and $d_{alloy}$ is the density of the lithium-magnesium-aluminum alloy. The density of the alloy is the mass of the alloy per unit volume of the alloy, and the volume is the apparent volume of the alloy.

The term 'apparent volume' means the size or capacity that occupies the external space of an object, and refers to the external size or space without considering the actual internal structure or density of the material. The apparent volume can generally be calculated using measurements such as length, width and height. For example, the apparent volume of a cuboid-shaped object can be calculated as length $\times$ width $\times$ height. The volume for regularly shaped samples (e.g. cube, cylinder, etc.) may be measured in its dimensions using appropriate tools such as a ruler or calipers, known by the skilled person in the art. For irregularly shaped samples the volume may be measured by the displacement of a liquid with known volume and measuring the change in volume. The change in volume may be equal to the volume of the sample. The skilled person may use other methods known in the art for measuring the volume of the sample.

The lithium-magnesium-aluminum alloy may have an $EM_d$ value of at least 500 (MPa · cm$^3$) / g according to the equation (1). The lithium-magnesium-aluminum alloy may have an $EM_d$ value of at least 550 (MPa · cm$^3$) / g according to the equation (1). The lithium-magnesium-aluminum alloy may have an $EM_d$ value of at least 575 (MPa · cm$^3$) / g according to the equation (1). The lithium-magnesium-aluminum alloy may have an $EM_d$ value of at least 600 (MPa · cm$^3$) / g according to the equation (1).

The lithium-magnesium-aluminum alloy may have an $EM_d$ value from 500 to 750 (MPa · cm$^3$) / g according to the equation (1). The lithium-magnesium-aluminum alloy may have an $EM_d$ value from 550 to 700 (MPa · cm$^3$) / g according to the equation (1). The lithium-magnesium-aluminum alloy may have an $EM_d$ value from 575 to 700 (MPa · cm$^3$) / g according to the equation (1). The lithium-magnesium-aluminum alloy may have an $EM_d$ value from 600 to 650 (MPa · cm$^3$) / g according to the equation (1).

Meanwhile, the lithium-magnesium-aluminum alloy according to the present disclosure may have a tensile strength of 1.50 MPa or more, preferably 1.70 MPa or more, more preferably 1.90 MPa or more or 1.95 MPa or more.

The lithium-magnesium-aluminum alloy according to the present disclosure may have a tensile strength of 5.0 MPa or less, for example 3.0 MPa or less, or 2.5 MPa or less, or 2.1 MPa or less .

The lithium-magnesium-aluminum alloy according to the present disclosure may have a tensile strength of 1.50 MPa or more and 5.0 MPa or less, for example 1.70 MPa or more and 3.0 MPa or less, or 1.90 MPa or more and 2.5 MPa or less, or 1.95 MPa or more and 2.1 MPa or less.

In the present disclosure, the tensile strength may be measured by the same method as the above-described elastic modulus measurement method.

The method of forming the lithium-magnesium-aluminum metal alloy is not particularly limited, and a method of forming a layer or film commonly used in the art may be used. For example, a method such as compression method, coating method, may be used.

It might be provided that the lithium-magnesium-aluminum alloy is obtainable by a method comprising the steps: a) melting metallic lithium to obtain a lithium melt; b) adding metallic magnesium and metallic aluminum to the lithium melt obtained in step a) to obtain a lithium-magnesium-aluminum melt; c) maintaining the lithium-magnesium-aluminum melt obtained in step b) at a temperature of at least 200°C ; and d) cooling the lithium-magnesium-aluminum melt obtained in step c) to obtain a lithium-magnesium-aluminum alloy ingot; and e) manufacturing a lithium-magnesium-aluminum alloy, that is, a lithium-magnesium-aluminum alloy in a desired form, such as a foil form, from the lithium-magnesium-aluminum alloy ingot.

The method may comprise providing the metallic lithium, e.g. placing a solid piece of lithium, such as a lithium ingot, together with the metallic magnesium, e.g. a solid piece of magnesium, such as a magnesium pellet, and the metallic aluminum, e.g. a solid piece of aluminum, such as an aluminum pellet, into an appropriate heating means, such as a vessel, etc. It might be provided that the heating means further comprise stirring means allowing to stir a melt of the three metals and means for providing an inert gas atmosphere in the heating means. It may be provided that the providing metallic lithium together with metallic magnesium and the metallic aluminum does not comprise a sputtering step, such as DC sputter. Rather, it may be provided that step b) includes stirring the melt. In this way, a more cost-efficient way is provided to provide a lithium-magnesium aluminum alloy with even improved homogeneous magnesium and aluminum distribution in the foil.

The melting may comprise heating the metallic lithium together with a metallic magnesium and metallic aluminum at a temperature from 200°C to 500°C.

The cooling in step d) may be cooling to room temperature.

In an embodiment of the present disclosure, the method by which the lithium-magnesium-aluminum alloy is achieved may comprise the following step of manufacturing a lithium-magnesium-aluminum alloy from the lithium-magnesium-aluminum alloy ingot, wherein the manufacturing comprises roll pressing of the lithium-magnesium-aluminum alloy ingot. The roll pressing may include that heat and pressure are simultaneously applied, it may be performed using a hot roll press or the like.

Meanwhile, in an embodiment of the present disclosure, the method further comprises the following step f) of depositing the lithium-magnesium-aluminum alloy on a current collector.

The objects are further achieved by a negative electrode for a lithium secondary battery obtainable by the method according to the present disclosure.

The objects are further achieved by a negative electrode for a lithium secondary battery comprising an alloy consisting of a combination of lithium and at least one further metal, wherein the alloy has an elastic modulus of at least 300 MPa according to the above.

The alloy may have an elastic modulus of at least 300 MPa. The alloy may have an elastic modulus of at least 350 MPa. The alloy may have an elastic modulus of at least 400 MPa. The alloy may have an elastic modulus of at least 450 MPa. The alloy may have an elastic modulus of at least 500 MPa. The alloy may have an elastic modulus of at least 550 MPa. The alloy may have an elastic modulus of at least 600 MPa. The alloy may have an elastic modulus of at least 650 MPa.

The alloy may have an elastic modulus of not more than 1,000 MPa. The alloy may have an elastic modulus of not more than 900 MPa. The alloy may have an elastic modulus of not more than 800 MPa.

The alloy may have an elastic modulus from 300 MPa to 1,000 MPa. The alloy may have an elastic modulus from 400 MPa to 1,000 MPa. The alloy may have an elastic modulus from 500 MPa to 900 MPa. The alloy may have an elastic modulus from 550 MPa to 800 MPa. The alloy may have an elastic modulus from 500 MPa to 700 MPa.

The objects are further achieved by a negative electrode for a lithium secondary battery comprising an alloy comprising a combination of lithium and at least one further metal, wherein the alloy has an $EM_d$ value of at least 600 (MPa · cm$^3$) / g according to the following equation (1)

$$EM_d = \frac{EM_{alloy}}{d_{alloy}} \qquad (1)$$

Here, $EM_{alloy}$ is the elastic modulus of the alloy according to ASTM standards; and $d_{alloy}$ is the density of the alloy. The density of the alloy is the mass of the alloy per unit volume of the alloy, and the volume is the apparent volume of the alloy.

The alloy may have an $EM_d$ value of at least 500 (MPa · cm$^3$) / g according to the equation (1). The alloy may have an $EM_d$ value of at least 550 (MPa · cm$^3$) / g according to the equation (1). The alloy may have an $EM_d$ value of at least 575 (MPa · cm$^3$) / g according to the equation (1). The alloy may have an $EM_d$ value of at least 600 (MPa · cm$^3$) / g according to the equation (1).

The alloy may have an $EM_d$ value of not more than 750 (MPa · cm$^3$) / g according to the equation (1). The alloy may have an $EM_d$ value of not more than 700 (MPa · cm$^3$) / g according to the equation (1). The alloy may have an $EM_d$ value of not more than 650 (MPa · cm$^3$) / g according to the equation (1).

The alloy may have an $EM_d$ value from 500 to 750 (MPa · cm$^3$) / g according to the equation (1). The alloy may have an $EM_d$ value from 550 to 700 (MPa · cm$^3$) / g according to the equation (1). The alloy may have an $EM_d$ value from 575 to 700 (MPa · cm$^3$) / g according to the equation (1). The alloy may have an $EM_d$ value from 600 to 650 (MPa · cm$^3$) / g according to the equation (1).

Meanwhile, the alloy according to the present disclosure may have a tensile strength of 1.50 MPa or more, preferably 1.70 MPa or more, more preferably 1.90 MPa or more or 1.95 MPa or more.

The alloy according to the present disclosure may have a tensile strength of 5.0 MPa or less, for example 3.0 MPa or less, or 2.5 MPa or less, or 2.1 MPa or less .

The alloy according to the present disclosure may have a tensile strength of 1.50 MPa or more and 5.0 MPa or less, for example 1.70 MPa or more and 3.0 MPa or less, or 1.90 MPa or more and 2.5 MPa or less, or 1.95 MPa or more and 2.1 MPa or less.

In an embodiment of the present disclosure, the further metal may comprise Magnesium (Mg) and/or Aluminum (Al). Preferably the further metal consists of Magnesium (Mg) and Aluminum (Al).In the present disclosure, the tensile strength may be measured by the same method as the above-described elastic modulus measurement method. The objects are further achieved by a lithium secondary battery comprising the negative electrode for a lithium secondary battery according to the present disclosure. The lithium secondary battery may further comprise a positive electrode, a separator and an electrolyte. The lithium secondary battery may be a lithium-sulfur battery.

The lithium sulfur battery according to the present disclosure may, in addition to the negative electrode, comprise further constituents known in the art, especially may further comprise a positive electrode (= cathode), a separator and an electrolyte. Especially, the lithium sulfur battery may comprise a positive electrode; a negative electrode; and an electrolyte interposed therebetween, wherein the negative electrode is the negative electrode as described herein.

The positive electrode may comprise a positive electrode current collector and a positive electrode active material layer applied on one or both surfaces of the positive electrode current collector.

The positive electrode current collector is for supporting the positive electrode active material and is as described in the current collector used for supporting the negative electrode.

The positive electrode active material layer may comprise a positive electrode active material and may further comprise a conductive material, a binder, an additive, and the like.

The positive electrode active material comprises sulfur, and specifically may comprise at least one selected from the group consisting of elemental sulfur ($S_8$) and a sulfur compound. The positive electrode active material may be at least one selected from the group consisting of inorganic sulfur, $Li_2S_n$ (n$\geq$1), a disulfide compound, an organic sulfur compound, and a carbon-sulfur polymer (($C_2S_x$)n: x = 2.5 to 50, n$\geq$2). Preferably, the positive electrode active material may be inorganic sulfur ($S_8$).

Sulfur contained in the positive electrode active material is used in combination with a conductive material such as a carbon material because it does not have electrical conductivity alone. Accordingly, sulfur is comprised in the form of a sulfur-carbon composite, and preferably, the positive electrode active material may be a sulfur-carbon composite.

The carbon contained in the sulfur-carbon composite is a porous carbon material and provides a framework capable of uniformly and stably immobilizing sulfur and compensates for the low electrical conductivity of sulfur so that the electrochemical reaction can proceed smoothly.

The porous carbon material can generally be prepared by carbonizing various carbonaceous precursors. The porous carbon material may comprise uneven pores therein, the average diameter of the pores is in the range of 1 to 200 nm, and the porosity may range from 10 to 90% of the total volume of the porous carbon material. The porosity may be, for example, measured by the method specified above. When the average diameter of the pores is less than the above range, the pore size is only at the molecular level and impregnation with sulfur is impossible. On the contrary, when the average diameter of the pores exceeds the above range, the mechanical strength of the porous carbon material is weakened, which is not preferable for application to the manufacturing process of the electrode.

The shape of the porous carbon material is in the form of sphere, rod, needle, plate, tube, or bulk, and can be used without limitation as long as it is commonly used in a lithium-sulfur battery.

The porous carbon material may have a porous structure or a high specific surface area, and may be any of those conventionally used in the art. For example, the porous carbon material may be, but is not limited to, at least one selected from the group consisting of graphite; graphene; carbon blacks such as Denka black, acetylene black, Ketjen black, channel black, furnace black, lamp black, and thermal black; carbon nanotubes (CNTs) such as single wall carbon nanotube (SWCNT) and multiwall carbon nanotubes (MWCNT); carbon fibers such as graphite nanofiber (GNF), carbon nanofiber (CNF), and activated carbon fiber (ACF); and graphite such as natural graphite, artificial graphite and expanded graphite, and activated carbon. Preferably, the porous carbon material may be carbon nanotubes.

The sulfur-carbon composite may contain 60 to 90 parts by weight, preferably 65 to 85 parts by weight, more preferably 70 to 80 parts by weight of sulfur, based on 100 parts by weight of the sulfur-carbon composite. When the content of sulfur is less than the above-described range, as the content of the porous carbon material in the sulfur-carbon composite is relatively increased, the specific surface area is increased and thus when manufacturing the positive electrode, the content of the binder is increased. This increase in the amount of use of the binder eventually increases the sheet resistance of the positive electrode and acts as an insulator to prevent electron pass, thereby deteriorating the performance of the battery. On the contrary, when the content of sulfur exceeds the above-described range, sulfur, which cannot be combined with the porous carbon material, aggregates with each other, or is re-leached to the surface of the porous carbon material, and thus is difficult to receive electrons, and cannot participate in electrochemical reactions, thereby resulting in loss of battery capacity.

In addition, sulfur in the sulfur-carbon composite is located on the surface of the porous carbon material, especially on at least one of the inner and outer surfaces of the aforementioned porous carbon material, and at this time, may exist in an area of less than 100%, preferably 1 to 95%, more preferably 60 to 90% of the entire inner and outer surface of the porous carbon material. When sulfur as described above is present on the inner and outer surfaces of the porous carbon material within the above range, the maximum effect may be exhibited in terms of an electron transfer area and wettability with an electrolyte. Specifically, since sulfur is thinly and evenly impregnated on the inner and outer surfaces of the porous carbon material in the above range, the electron transfer contact area can be increased during the charging/discharging process. When sulfur is located in an area of 100% of the entire inner and outer surface of the porous carbon material, the carbon material is completely covered with sulfur, so that it has poor wettability to the electrolyte and poor contact with the electrically conductive material included in the electrode, so that it cannot receive electrons and thus cannot participate in the electrochemical reaction.

The method for preparing the sulfur-carbon composite is not particularly limited in the present disclosure, and a method commonly used in the art may be used. As an example, a method of simply mixing sulfur and the porous carbon material and then heat-treating them to form a composite may be used.

The positive electrode active material may further comprise at least one additive selected from a transition metal element, a group IIIA element, a group IVA element, a sulfur compound of these elements, and an alloy of these elements and sulfur, in addition to the above-described components.

The transition metal element may comprise Sc, Ti, V, Cr, Mn, Fe, Co, Ni, Cu, Zn, Y, Zr, Nb, Mo, Tc, Ru, Rh, Pd, Os, Ir, Pt, Au, Hg and the like, and the group IIIA element may comprise Al, Ga, In, Tl and the like, and the group IVA element may comprise Ge, Sn, Pb, and the like.

The sulfur may be contained in an amount of 40 to 95 wt%, preferably 50 to 90 wt%, more preferably 60 to 85 wt%, based on a total of 100 wt% of the positive electrode active material layer constituting the positive electrode. In an embodiment of the present disclosure, when a sulfur-carbon composite is used as the positive electrode active material, the sulfur-carbon composite may be included in an amount of 90% to 97 wt% based on 100 wt% of the positive electrode active material layer. When the content of the positive electrode active material is less than the above range, it is difficult to sufficiently exhibit the electrochemical reaction of the positive electrode. On the contrary, when the content exceeds the above range, the content of the electrically conductive material and the binder to be described later is relatively insufficient, and thus there is a problem that the resistance of the positive electrode increases, and the physical properties of the positive electrode decrease.

The positive electrode active material layer may further selectively include a conductive material which allows electrons to move smoothly within the positive electrode (specifically, the positive electrode active material), and a binder for well attaching the positive electrode active material to the current collector.

The conductive material is a material that acts as a path, through which electrons are transferred from the current collector to the positive electrode active material, by electrically connecting the electrolyte and the positive electrode active material. The conductive material can be used without limitation as long as it has electrical conductivity.

For example, as the conductive material, graphite such as natural graphite or artificial graphite; carbon blacks such as Super-P, Denka black, acetylene black, Ketjen black, channel black, furnace black, lamp black, and thermal black; carbon derivatives such as carbon nanotubes and fullerenes; electrically conductive fibers such as carbon fibers and metal fibers; carbon fluoride; metal powders such as aluminum and nickel powder; or electrically conductive polymers such as polyaniline, polythiophene, polyacetylene, and polypyrrole may be used alone or in combination.

The conductive material may be contained in an amount of 0.01 to 30 wt% based on a total of 100 wt% of the positive electrode active material layer constituting the positive electrode. When the content of the electrically conductive material is less than the above range, it is difficult to transfer electrons between the positive electrode active material and the current collector, thereby reducing voltage and capacity. On the contrary, when the content exceeds the above range, the proportion of positive electrode active material is relatively reduced and thus the total energy (charge amount) of the battery can be reduced. Therefore, it is preferable that the content of the electrically conductive material is determined to be an appropriate content within the above-described range.

The binder maintains the positive electrode active material in the positive electrode current collector, and organically connects the positive electrode active materials to increase the bonding force between them, and any binder known in the art may be used.

For example, the binder may be any one selected from fluororesin-based binders comprising polyvinylidene fluoride (PVdF) or polytetrafluoroethylene (PTFE); rubber-based binders comprising styrene butadiene rubber (SBR), acrylonitrile-butadiene rubber, and styreneisoprene rubber; cellulose-based binders comprising carboxymethylcellulose (CMC), starch, hydroxy propyl cellulose, and regenerated cellulose; polyalcohol-based binders; polyolefin-based binders comprising polyethylene and polypropylene; polyimide-based binders; polyester-based binders; and silane-based binders, or mixtures or copolymers of two or more thereof.

The content of the binder may be 0.5 to 30 wt% based on a total of 100 wt% of the positive electrode active material layer constituting the positive electrode. When the content of the binder is less than 0.5 wt%, the physical properties of the positive electrode may be degraded and thus the positive electrode active material and conductive material may be detached. When the content exceeds the above range, the ratio of the positive electrode active material and the conductive material in the positive electrode may be relatively reduced, so that the capacity of the battery may be reduced. Therefore, it is preferable that the content of the binder is determined to be an appropriate content within the above-described range.

In the present disclosure, the method of manufacturing the positive electrode is not particularly limited and may be a known method by a person skilled in the art or various modified methods thereof.

As an example, the positive electrode may be prepared by preparing a slurry composition for a positive electrode comprising the above-described components, and then applying it to at least one surface of the positive electrode current collector.

The slurry composition for a positive electrode comprises the positive electrode active material, a conductive material, and a binder as described above, and may further comprise a solvent other than the above.

As the solvent, one capable of uniformly dispersing a positive electrode active material, a conductive material, and a binder may be used. Such a solvent may be an aqueous solvent, and water is most preferred, and in this case, water may be distilled water or deionized water. However, it is not necessarily limited thereto, and if necessary, a lower alcohol that can be easily mixed with water may be used. Examples of the lower alcohol include methanol, ethanol, propanol, isopropanol, and butanol, and preferably, they may be used in combination with water.

The solvent may be contained at a level having a concentration that allows easy coating, and the specific content varies depending on the application method and apparatus.

The slurry composition for a positive electrode may additionally contain, if necessary, materials commonly used for the purpose of improving its function in the relevant technical field as necessary. For example, a viscosity modifier, a fluidizing agent, a filler, etc. are mentioned.

In the present disclosure, the method of applying the slurry composition for a positive electrode is not particularly limited in the present disclosure, and for example, methods such as a doctor blade method, a die casting method, a comma coating method, and a screen printing method can be used. In addition, after being molded on a separate substrate, the slurry for the positive electrode may be applied on the positive electrode current collector by a pressing or lamination method.

After the application, a drying process for removing the solvent may be performed. The drying process is performed at a temperature and time at a level capable of sufficiently removing the solvent, and the conditions may vary depending on the type of the solvent, and thus are not particularly limited in the present disclosure. Examples of the drying method may comprise a drying method by warm air, hot air, or low-humidity air, a vacuum drying method, and a drying method by irradiation with (far)-infrared radiation or electron beam. The drying rate is usually adjusted so that the solvent can be removed as quickly as possible within a speed range that does not cause cracks in the positive electrode active material layer due to the concentration of stress and does not delaminate the positive electrode active material layer from the positive electrode current collector.

Additionally, the density of the positive electrode active material in the positive electrode may be increased by pressing the current collector after drying. Methods, such as a mold press and a roll press, are mentioned as a press method.

The porosity of the positive electrode, specifically, the positive electrode active material layer prepared by the above-described composition and manufacturing method may be 50 to 80%, and preferably 60 to 75%. When the porosity of the positive electrode is less than 50%, since the degree of filling of the slurry composition for the positive electrode comprising a positive electrode active material, an electrically conductive material, and a binder becomes too high, there are problems that sufficient electrolyte to exhibit ion conduction and/or electrical conduction between positive electrode active materials cannot be maintained, and thus output characteristics or cycle characteristics of the battery may be deteriorated, the overvoltage and the reduction in discharging capacity become serious. On the contrary, when the porosity of the positive electrode exceeds 80% and has an excessively high porosity, there is a problem that the physical and electrical connection with the current collector is lowered and thus adhesion is lowered and the reaction becomes difficult, and there is a problem that the increased porosity is filled by the electrolyte and thus the energy density of the battery is lowered. Therefore, the porosity of the positive electrode is appropriately adjusted within the above range.

In addition, the loading amount of sulfur in the positive electrode according to the present disclosure, that is, the mass of sulfur per unit area of the positive electrode active material layer in the positive electrode may be 0.5 to 15 mg/cm$^2$, preferably 1 to 10 mg/cm$^2$.

The negative electrode is as described above.

The electrolyte includes lithium ions and is intended to cause an electrochemical oxidation or reduction reaction in the positive electrode and the negative electrode through them.

The electrolyte may be a non-aqueous electrolyte solution or a solid electrolyte that does not react with lithium metal, but is preferably a non-aqueous electrolyte, and comprises an electrolyte salt and an organic solvent.

The electrolytic salt which is comprised in the non-aqueous electrolyte solution is lithium salt. The lithium salt can be used without limitation as long as it is commonly used in an electrolyte solution for a lithium secondary battery. For example, the lithium salt may be LiCl, LiBr, LiI, LiClO$_4$, LiBF$_4$, LiB$_{10}$Cl$_{10}$, LiPF$_6$, LiCF$_3$SO$_3$, LiCF$_3$CO$_2$, LiAsF$_6$, LiSbF$_6$, LiAlCl$_4$, CH$_3$SO$_3$Li, (CF$_3$SO$_2$)$_2$NLi, LiN(SO$_2$F)$_2$, lithium chloroborane, lithium lower aliphatic carboxylate, tetraphenyl lithium borate, lithium imide, etc.

The concentration of the lithium salt may be 0.2 to 2 M, preferably 0.4 to 2 M, more preferably 0.4 to 1.7 M depending on various factors such as the exact composition of the electrolyte solvent mixture, the solubility of the salt, the conductivity of the dissolved salt, the charging and discharging conditions of the battery, the operating temperature, and other factors known in the lithium battery field. When the concentration of the lithium salt is less than 0.2 M, the conductivity of the electrolyte may be lowered and thus the performance of the electrolyte may be deteriorated. When the concentration of the lithium salt is more than 2 M, the viscosity of the electrolyte may increase and thus the mobility of the lithium ion may be reduced.

As the organic solvent contained in the non-aqueous electrolyte solution, those conventionally used in an electrolyte solution for a lithium secondary battery may be used without limitation, and for example, ether, ester, amide, linear carbonate, cyclic carbonate, etc. may be used alone or in combination of two or more. Among them, representatively, ether-based compounds may be comprised.

The ether-based compound may comprise acyclic ethers and cyclic ethers.

For example, the acyclic ether may be, but is not limited to, at least one selected from the group consisting of dimethyl ether, diethyl ether, dipropyl ether, methylethyl ether, methylpropyl ether, ethylpropyl ether, dimethoxyethane, diethoxyethane, ethylene glycol ethylmethylether, diethylene glycol dimethyl ether, diethylene glycol diethyl ether, diethylene glycol methylethyl ether, triethylene glycol dimethyl ether, triethylene glycol diethyl ether, triethylene glycol methylethyl ether, tetraethylene glycol dimethyl ether, tetraethylene glycol diethyl ether, tetraethylene glycol methylethyl ether, polyethylene glycol dimethyl ether, polyethylene glycol diethyl ether, and polyethylene glycol methylethyl ether.

As an example, the cyclic ether may be, but is not limited to, at least one selected from the group consisting of 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxy benzene, 1,3-dimethoxy benzene, 1,4-dimethoxy benzene, and isosorbide dimethyl ether.

Examples of the ester of the organic solvent may be, but is not limited to, any one selected from the group consisting of methyl acetate, ethyl acetate, propyl acetate, methyl propionate, ethyl propionate, propyl propionate, $\gamma$-

butyrolactone, γ-valerolactone, γ-caprolactone, σ-valerolactone, and ε-caprolactone, and a mixture of two or more thereof.

Specific examples of the linear carbonate compound may representatively be, but is not limited to, any one selected from the group consisting of dimethyl carbonate (DMC), diethyl carbonate (DEC), dipropyl carbonate, ethylmethyl carbonate (EMC), methylpropyl carbonate, and ethylpropyl carbonate, or a mixture of two or more thereof.

In addition, specific examples of the cyclic carbonate compound may be any one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate, and halides thereof, or a mixture of two or more thereof. Examples of such halides comprise, but are not limited to, fluoroethylene carbonate (FEC) and the like.

The electrolyte may further include a nitric acid or nitrous acid-based compound as an additive in addition to the electrolyte salt and the organic solvent described above. The nitric acid or nitrite-based compound has an effect of forming a stable film on a lithium metal electrode, which is a negative electrode, and improving charging/discharging efficiency.

The nitric acid or nitrous acid-based compound is not particularly limited in the present disclosure, but may be at least one selected from the group consisting of inorganic nitric acid or nitrous acid compounds such as lithium nitrate ($LiNO_3$), potassium nitrate ($KNO_3$), cesium nitrate ($CsNO_3$), barium nitrate ($Ba(NO_3)_2$), ammonium nitrate ($NH_4NO_3$), lithium nitrite ($LiNO_2$), potassium nitrite ($KNO_2$), cesium nitrite ($CsNO_2$) and ammonium nitrite ($NH_4NO_2$); organic nitric acid or nitrous acid compounds such as methyl nitrate, dialkyl imidazolium nitrate, guanidine nitrate, imidazolium nitrate, pyridinium nitrate, ethyl nitrite, propyl nitrite, butyl nitrite, pentyl nitrite, and octyl nitrite; organic nitro compounds such as nitromethane, nitropropane, nitrobutane, nitrobenzene, dinitrobenzene, nitropyridine, dinitropyridine, nitrotoluene, dinitrotoluene, and combinations thereof, and preferably, lithium nitrate is used.

The injection of the electrolyte may be performed at an appropriate stage of the manufacturing processes of the electrochemical device, depending on the manufacturing process and required properties of the final product. That is, the injection can be performed before assembling the electrochemical device or at the final stage of assembling the electrochemical device.

A separator may be additionally comprised between the positive electrode and the negative electrode.

The separator may be made of a porous non-conductive or insulating material that separates or insulates the positive electrode and the negative electrode from each other and enables transport of lithium ions between the positive electrode and the negative electrode. The separator may be used without special limitation as long as it is used as a separator in a conventional lithium-sulfur battery. The separator may be an independent member such as a film or may comprise a coating layer added to the positive and/or negative electrodes.

It is preferable that the separator has excellent wettability to the electrolyte while having low resistance to ion migration of the electrolyte.

The separator may be made of a porous substrate, and the porous substrate may be used as long as it is a porous substrate commonly used for a lithium-sulfur battery, and porous polymer films may be used alone or by laminating them, and for example, a nonwoven fabric or a polyolefin-based porous membrane made of glass fibers, polyethylene terephthalate fibers, etc. having a high melting point may be used, but is not limited thereto.

The material of the porous substrate is not particularly limited in the present disclosure, and any material can be used as long as it is a porous substrate commonly used in an electrochemical device. For example, the porous substrate may comprise at least one material selected from the group consisting of polyolefin such as polyethylene and polypropylene, polyester such as polyethyleneterephthalate and polybutyleneterephthalate, polyamide, polyacetal, polycarbonate, polyimide, polyetheretherketone, polyethersulfone, polyphenyleneoxide, polyphenylenesulfide, polyethylenenaphthalate, polytetrafluoroethylene, polyvinylidene fluoride, polyvinyl chloride, polyacrylonitrile, cellulose, poly(p-phenylene benzobisoxazole), and polyarylate.

The thickness of the porous substrate is not particularly limited, but may be 1 to 100 μm, preferably 5 to 50 μm. Although the thickness range of the porous substrate is not particularly limited to the above-mentioned range, when the thickness is excessively thinner than the lower limit described above, mechanical properties are deteriorated and thus the separator may be easily damaged during use of the battery.

The average diameter and porosity of the pores present in the porous substrate are also not particularly limited but may be 0.001 μm to 50 μm and 10% by volume to 95% by volume, respectively.

The lithium secondary battery according to the present disclosure can be manufactured by lamination, stacking, and folding processes of the separator and the electrodes, in addition to the usual winding process.

The shape of the lithium secondary battery is not particularly limited and may be various shapes such as a cylindrical shape, a laminate shape, and a coin shape.

Also, the present disclosure provides a battery module comprising the lithium-sulfur battery described above as a unit battery.

The battery module may be used as a power source for medium to large-sized devices requiring high temperature stability, long cycle characteristics, high capacity characteristics, and the like.

Examples of such medium to large-sized devices may comprise, but are not limited to, a power tool powered and moved by an electric motor; an electric car including an electric vehicle (EV), a hybrid electric vehicle (HEV), a plug-in hybrid electric vehicle (PHEV), and the like; an electric two-wheeled vehicle including an electric bike (E-bike) and an electric scooter (E-scooter); an electric golf cart; a power storage system, etc.

EXAMPLES

Hereinafter, specific examples of the present disclosure will be described. It will be apparent to those skilled in the art, however, that the following examples are only illustrative of the present disclosure and various changes and modifications can be made within the scope of the present disclosure, and such variations and modifications are within the scope of the appended claims.

**Preparation example 1 (Preparation of a Li-Mg-Al alloy)**

A lithium ingot was melted at a temperature of 200°C to obtain a lithium melt. A solid magnesium source (pellets) and a solid aluminum source (pellets) were added to the lithium melt to obtain a lithium-magnesium-aluminum melt. The amount of magnesium was 5wt% with respect to the total weight of the lithium-magnesium-aluminum melt. The amount of aluminum was 0.5 wt% with respect to the total weight of the lithium-magnesium-aluminum melt.
The obtained melt was cooled to room temperature (about 22°C) to obtain a lithium-magnesium-aluminum alloy ingot. A lithium-magnesium-aluminum alloy having a foil form (lithium-magnesium-aluminum alloy foil) with a thickness of 80 $\mu$m was manufactured from the lithium-magnesium-aluminum-alloy ingot by roll pressing.

**Preparation example 2 (Preparation of a Li-Zn alloy)**

A lithium ingot was melted at a temperature of 200°C to obtain a lithium melt. A solid Zn source (pellets) was added to the lithium melt to obtain a lithium-Zn melt. The amount of Zn was 5wt% with respect to the total weight of the lithium-Zn melt.
The obtained melt was cooled to room temperature (about 22°C) to obtain a lithium-Zn alloy ingot. A lithium-Zn alloy having a foil form in a thickness of 80 $\mu$m was manufactured from the lithium-Zn alloy ingot by roll pressing.

**Preparation example 3 (Preparation of a Li-Al alloy)**

A lithium ingot was melted at a temperature of 200°C to obtain a lithium melt. A solid aluminum source (pellets) was added to the lithium melt to obtain a lithium-aluminum melt. The amount of aluminum was 0.5 wt% with respect to the total weight of the lithium-aluminum melt.
The obtained melt was cooled to room temperature (about 22°C) to obtain a lithium-aluminum alloy ingot. A lithium-aluminum alloy having a foil form in a thickness of 80 $\mu$m was manufactured from the lithium-aluminum alloy ingot by roll pressing.

**Preparation example 4 (Preparation of a Li-Mg alloy)**

A lithium ingot was melted at a temperature of 200°C to obtain a lithium melt. A solid magnesium source (pellets) was added to the lithium melt to obtain a lithium-magnesium melt. The amount of magnesium was 5wt% with respect to the total weight of the lithium-magnesium melt.
The obtained melt was cooled to room temperature (about 22°C) to obtain a lithium-magnesium alloy ingot. A lithium-magnesium alloy having a foil form in a thickness of 80 $\mu$m was manufactured from the lithium-magnesium alloy ingot by roll pressing.

**Example 1**

The lithium-magnesium-aluminum alloy as prepared in Preparation example 1 above with a thickness of 80 $\mu$m was used as an anode (= negative electrode), and a separate current collector was not used.
A cathode (= positive electrode) was prepared by mixing 96 parts by weight of sulfur/carbon composite (S/C 75:25 parts by weight) as a cathode active material with 4 parts by weight of styrene butadiene rubber/carboxymethyl cellulose (SBR/CMC 7:3) as a polymer binder, to obtain a slurry. The slurry was applied to both sides of an aluminum current collector, followed by drying at 50°C for 12 hours and roll pressing. The cathode loading was 2.70 mAh/cm$^2$ and the porosity was 78% by volume.
As a separator, a 16 $\mu$m polyethylene porous film (porosity 68% by volume) was used.
A folded cell was assembled by inserting a total of 7 cathodes and 8 anodes and stacking them with the porous polyethylene separator. A pouch cell was manufactured by inserting the cathode and anode tabs into a pouch and injecting and sealing the electrolyte. The manufactured lithium-sulfur battery was driven at a temperature of 25°C under 0.3 C charge/2.0 C discharge conditions to confirm the cycle life and efficiency. The electrolyte was prepared by adding 1M lithium bis(trifluoromethanesulfonyl)imide (LiTFSI) and 1 wt% of lithium nitrate ($LiNO_3$) to a mixture of 1,3-dioxolane and dimethyl ether (DOL:DME = 1).

### Comparative example 1

A lithium sulfur battery was prepared in the same way as in case of Example 1 with the only exception that a 80 $\mu$m lithium foil was used as the anode.

### Comparative example 2

A lithium sulfur battery was prepared in the same way as in case of Example 1 with the only exception that a 80 $\mu$m lithium-zinc alloy obtained in Preparation example 2 was used as the anode.

### Comparative example 3

A lithium sulfur battery was prepared in the same way as in case of Example 1 with the only exception that a 80 $\mu$m lithium-aluminum alloy obtained in Preparation example 3 was used as the anode.

### Experiment evaluation 1: Pouch cell evaluation

The manufactured lithium-sulfur batteries according to Preparation example 1 and Comparative examples 1 to 3 were driven at a temperature of 25°C under 0.3 C charge/2.0 C discharge, 1.8V to 2.5V(vs. Li/Li+) conditions to confirm the cycle life and efficiency.

The measurement of charge/discharge and coulombic efficiency of the battery was conducted through a battery charger/discharger PNE (Wonik). Specific capacity is the ratio of the discharge capacity (mAh) of the battery confirmed in the charger/discharger to the weight of sulfur contained in the positive electrode. In addition, the coulombic efficiency is the % ratio of the discharge capacity to the charge capacity.

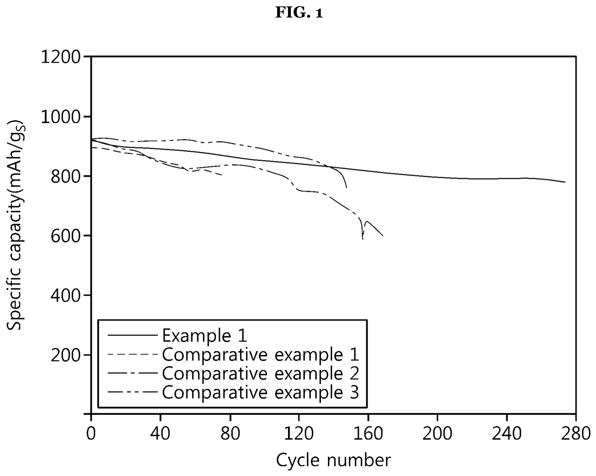

As it can be seen from FIG. 1, when applying a lithium-magnesium-aluminum three-phase alloy anode (Example 1), the cycle life is superior to that of a lithium-sulfur battery using bare Li as an anode (Comparative Example 1). In the case of Example, the battery was driven close to 280 cycles, but in the case of Comparative Example, the driving stopped before the number of charge/discharge cycles reached 200 cycles.

When lithium-magnesium-aluminum alloy anode according to the present disclosure is applied (Example 1), cycle life is superior to lithium-sulfur batteries (Comparative Examples 2 and 3) where other dissimilar metals-lithium alloys are applied as anodes.

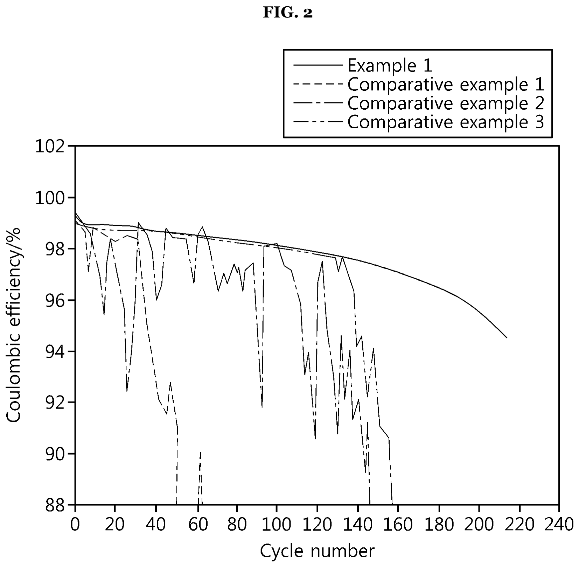

As it can be seen from FIG. 2, when applying a lithium-magnesium-aluminum alloy anode according to the present disclosure (Example 1), the coulombic efficiency stability is higher than that of Li metal (Comparative example 1) and alloys of lithium and other dissimilar metals (Comparative examples 2 and 3).

### Experiment evaluation 2: Elastic modulus

As it can be seen from FIG. 3, Li metal and Li-Mg alloy (Preparation example 4) have similar elastic moduli, and in the case of the Li-Mg-Al alloy (Preparation example 1) according to the present disclosure, the elastic modulus is more than twice as large.

Furthermore, even if the elastic moduli are considered relative to the density of the material, the mechanic properties of the inventive Li-Mg-Al material are still significantly superior as shown in Table 1.

Table 1:

|  | Li metal | LiMg alloy (preparation example 4) | Li-Mg-Al alloy (preparation example 1) |
|---|---|---|---|
| Density ($g/m^3$) | 0.483 | 0.375 | 1.08 |
| Elastic modulus/density (MPa · $cm^3$) / g) | 534 | 595 | 604 |
| Tensile strength (Mpa) | 1.29 | 1.41 | 2.04 |

The elastic modulus and tensile strength were measured by the following method. First, samples are prepared by punching alloys obtained in Preparation example, lithium metal and Preparation Example 4 into a predetermined size, and then measurements were performed using a Universal Testing Machine (UTM) and a 20N or 100N load cell for each specimen. A single strain rate of 0.01/s (18 mm/min) was applied as the measurement condition. FIG. 4 shows a photographic image of an example of UTM equipment used in measuring the elastic modulus.

**Experiment evaluation 3: Surface observation**

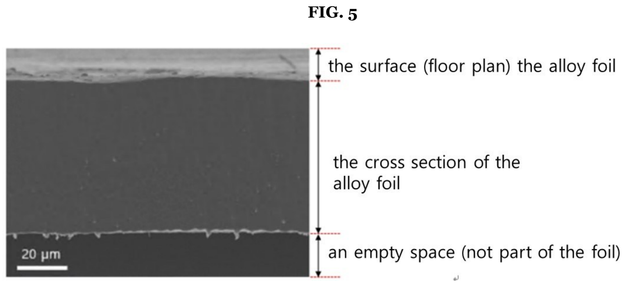

The lithium-magnesium-aluminum alloy foil obtained in Preparation Example 1 was subjected to ion milling to obtain a cross section, and the cross section was observed using a scanning electron microscope (SEM), as shown in FIG. 5. Referring to FIG. 5, it was confirmed that the cross section of the obtained alloy foil exhibited a uniform morphology.
The SEM equipment used JSM-7200F of JOEL KOREA, and the resolution was 3.0 nm (15 kV, WD 10 mm, probe current 5 nA).

**Experiment evaluation 4: EDS measurement results**

As a result of performing EDS analysis on the alloy of Preparation Example 1, it was confirmed that magnesium and aluminum were distributed over the entire surface of the negative electrode. FIG. 6 is an EDS analysis photograph in which the distribution of magnesium is confirmed in the alloy of Preparation Example 1, and FIG. 7 is an EDS analysis photograph in which the distribution of aluminum is confirmed. For the EDS analysis, Ultim Max 65 was used, and conditions were 15 kV, WD 10 mm, and probe current 5 nA.The features disclosed in the foregoing description and in the dependent claims may, both separately and in any combination thereof, be material for realizing the aspects of the disclosure made in the independent claims, in diverse forms thereof.

**Claims**

1. Negative electrode for a lithium secondary battery, comprising an alloy made of a combination of lithium and at least one further metal, wherein the alloy has an elastic modulus of at least 300 MPa measured as set forth in the description.

2. Negative electrode for a lithium secondary battery, comprising an alloy made of a combination of lithium and at least one additional metal, wherein the alloy has an $EM_d$ value of at least 500 (MPa $\cdot$ cm$^3$) / g according to the following equation (1):

$$EM_d = \frac{EM_{alloy}}{d_{alloy}} \qquad (1)$$

wherein $EM_{alloy}$ is the elastic modulus of the lithium-magnesium-aluminum alloy measured as set forth in the description, $d_{alloy}$ is the density of the lithium-magnesium-aluminum alloy, the density of the alloy is the mass of the alloy per unit volume of the alloy, and the volume is the apparent volume of the alloy.

3. Negative electrode for a lithium secondary battery according to claim 1 or 2, wherein the further metal is at least one of magnesium and aluminum.

4. Negative electrode for a lithium secondary battery according to any of the claims 1 to 3, wherein the at least one further metal includes or consists of magnesium and aluminum, and a weight ratio of magnesium to aluminum is from 2:1 to 20:1.

5. Negative electrode for a lithium secondary battery according to any of the claims 1 to 4, wherein the alloy may has an elastic modulus of not more than 1,000 MPa.

6. Negative electrode for a lithium secondary battery according to any of the claims 1 to 5, wherein the alloy has an elastic modulus of at least 400 MPa.

7. Negative electrode for a lithium secondary battery according to any of the claims 1 to 6, wherein the alloy has an $EM_d$ value of at least 600 (MPa $\cdot$ cm$^3$) / g according to the equation (1).

8. Negative electrode for a lithium secondary battery according to any of the claims 1 to 7, wherein the alloy has an $EM_d$ value from 500 to 750 (MPa · cm$^3$) / g according to the equation (1).

9. Negative electrode for a lithium secondary battery according to any of the claims 1 to 7, wherein the alloy has a tensile strength of 1.50 MPa or more and 5.0 MPa or less.

10. Lithium secondary battery, comprising a positive electrode, a negative electrode, a separator interposed between the positive electrode and the negative electrode, and an electrolyte, wherein the negative electrode is a negative electrode according to any one of claims 1 to 9.

11. Lithium secondary battery according to claim 10, wherein the lithium secondary battery is a lithium-sulfur battery comprising a positive electrode active material, wherein the positive electrode active material contains sulfur (S) and/or a sulfur (S) compound.

12. Method for preparing a negative electrode for a lithium secondary battery according to claim 11, wherein the alloy is obtained in the form of ingot, and the method further comprises the step of thinning the ingot into a plate structure.

**FIG. 1**

**FIG. 2**

**FIG. 3**

**FIG. 4**

**FIG. 5**

the surface (floor plan) the alloy foil

the cross section of the alloy foil

an empty space (not part of the foil)

**FIG. 6**

**FIG. 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220110408
- KR 1020230082211
- KR 1020230114846
- KR 20160034183
- KR 20160052351